# EUROPEAN PATENT SPECIFICATION

(11) **EP 4 151 850 B1**
(45) Date of publication and mention of the grant of the patent: **25.02.2026**
(21) Application number: 22206787.8
(22) Date of filing: 20.05.2020
(51) Int. Cl.: F02K 9/18, F02K 9/24, F02K 9/72

(54) **SOLID ROCKET MOTOR PROPELLANT MANUFACTURE AND CONFIGURATIONS**
FESTSTOFFRAKETENMOTORTREIBSTOFFHERSTELLUNG UND -KONFIGURATIONEN
FABRICATION ET CONFIGURATIONS DE PROPERGOL SOLIDE POUR MOTEUR DE FUSÉE

(30) Priority: 31.05.2019 US 201916427663
(43) Date of publication of application: 22.03.2023
(62) Divisional of application: 20175839.8
(73) Proprietor: RTX Corporation, Farmington, CT 06032 (US)
(72) Inventor: DAVIS, Dustin W, Marlborough, 06447 (US)
(74) Representative: Dehns

(56) References cited:
- DE-B1- 2 024 897
- GB-A- 1 605 418
- JP-A- 2013 040 588
- US-A- 3 136 831
- US-B2- 7 141 812

## Description

### BACKGROUND

The disclosure relates to solid rocket motor propellant molding. More particularly, the disclosure relates to mold manufacture.

Typical solid rocket propellants have included the combination of fuel (e.g., finely divided metals/alloys), oxidizers (e.g., crystalline high explosive compounds), and binder (e.g., organics). To form a solid rocket motor, propellant is typically cast/molded and dried or cured to form a solid grain shape. Typical rocket motor propellant grain shapes are cylindrical outside with a central axial passageway extending to an outlet at one end of the grain. The passageway may be blind or may be a through-passageway with the opposite end being blocked by a motor casing. The open downstream end may be exposed to a motor nozzle (e.g., a convergent-divergent nozzle).

Several examples of propellant composition and manufacturing techniques are found in United States Patent 3,702,272 (the '272 patent) of McDonnell et al., November 7, 1972, "Spherical Rocket Propellant Casting Granules and Method of Preparation". Further compositions are disclosed in United States Patent Application Publication 2017/0240484A1 (the '484 publication) of Terry et al., August 24, 2017, "Solid-Rocket Propellants". The '484 publication discloses several examples of use of aluminum-lithium alloys as fuels (replacing baseline pure aluminum or pure lithium), ammonium perchlorate as an oxidizer, and organic binders (e.g., hydroxyl-terminated polybutadiene (HTPB)). Such binders can serve a dual purpose of also augmenting the fuel.

In hybrid rocket motors, a liquid propellant (or propellant component) is passed through a solid propellant (or propellant component). In one area of examples, the liquid is an oxidizer and the solid is a fuel. Control over liquid flow (via pumps and/or valves) may control motor thrust, even allowing the motor to be stopped and restarted. In other examples, one or both of the liquid and solid may be a fuel/oxidizer mixture. In such situations, the liquid may be relatively higher in oxidizer content and the solid relatively higher in fuel content.

Separately, United States Patent 7,141,812 (the '812 patent) of Appleby et al., November 28, 2006, "Devices, methods, and systems involving castings", and United States Patent 10,207,315 (the '315 patent) of Appleby et al., February 19, 2019, "Systems, devices, and/or methods for manufacturing castings". Such a method is known under the trademark TOMO of Mikro Systems, Inc. of Charlottesville, Virginia.

DE2024897B1, JP2013040588A, US3136831A and GB1605418A disclose arrangements of the prior art.

### SUMMARY

One aspect of the invention involves a method for manufacturing a solid propellant. The method comprises: forming a tool of layers of a first material wherein cuts in the layers form a first interior chamber in the tool; using the tool to mold a second material in the first interior chamber; removing the molded second material from the tool; using the molded second material to mold an interior chamber in a rocket propellant grain; and removing the molded second material from the rocket propellant grain; wherein the molded second material molds a Helmholtz resonator in the rocket propellant grain.

A further embodiment of any of the foregoing embodiments may additionally and/or alternatively include the first material being metallic.

A further embodiment of any of the foregoing embodiments may additionally and/or alternatively include the second material being a silicone.

A further embodiment of any of the foregoing embodiments may additionally and/or alternatively include the forming the tool comprising: forming the layers with the cuts; and bonding the layers to each other.

A further embodiment of any of the foregoing embodiments may additionally and/or alternatively include the forming the layers comprising photomasking and etching.

A further embodiment of any of the foregoing embodiments may additionally and/or alternatively include the forming the layers comprising laser cutting.

A further embodiment of any of the foregoing embodiments may additionally and/or alternatively include the layers having thickness of 0.001 inch to 0.003 inch (25 µm to 76 µm).

A further embodiment of any of the foregoing embodiments may additionally and/or alternatively include the elastic mandrel comprising: a shaft; and at least one radial protrusion from the shaft, the at least one radial protrusion casting at least one radial extension of the interior chamber.

A further embodiment of any of the foregoing embodiments may additionally and/or alternatively include the at least one radial extension of the interior chamber comprising a full annulus.

A further embodiment of any of the foregoing embodiments may additionally and/or alternatively include the at least one radial extension of the interior chamber comprising: a proximal portion; and an axially protuberant distal portion.

A further embodiment of any of the foregoing embodiments may additionally and/or alternatively include the at least one radial extension of the interior chamber being a single off-center extension at a given axial position.

A further embodiment of any of the foregoing embodiments may additionally and/or alternatively include the method being repeated with the same mandrel to mold a second rocket propellant grain.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a central longitudinal sectional view of a propellant grain.
FIG. 2 is a central longitudinal sectional view of a mold used to mold the grain of FIG. 1.
FIG. 3 is a central longitudinal sectional view of a mold for molding a mandrel of the mold of FIG. 2.
FIG. 4 is a central longitudinal sectional view of a mold half of the mold of FIG. 3 schematically showing laminations.
FIG. 5 is a transverse sectional view of a second propellant grain.
FIG. 6 is a central longitudinal sectional view of a third propellant grain.
FIG. 7 is a transverse sectional view of the third propellant grain taken along line 7-7 of FIG. 6.
FIG. 8 is a transverse sectional view of the third propellant grain taken along line 8-8 of FIG. 6.
FIG. 9 is a transverse sectional view of the third propellant grain taken along line 9-9 of FIG. 6.
FIG. 10 is a central longitudinal sectional view of a fourth propellant grain.
FIG. 11 is a transverse sectional view of the fourth propellant grain taken along line 11-11 of FIG. 10.
FIG. 12 is a transverse sectional view of the fourth propellant grain taken along line 12-12 of FIG. 10.

Like reference numbers and designations in the various drawings indicate like elements.

### DETAILED DESCRIPTION

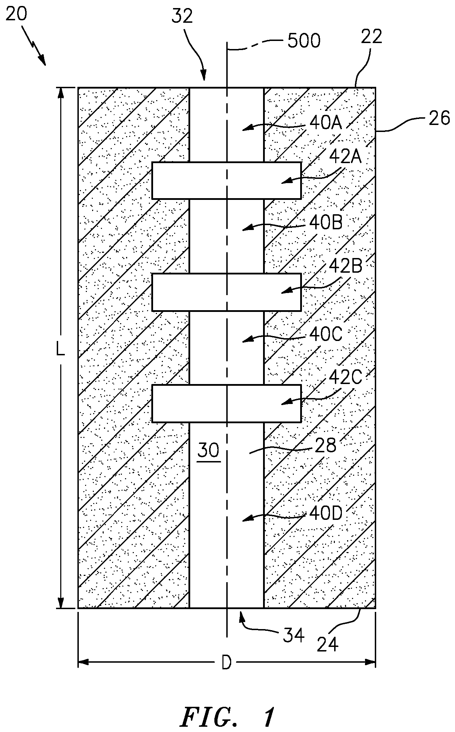

FIG. 1 shows a propellant grain 20 having a central longitudinal axis or centerline 500. The grain extends from a first end 22 to a second end 24 and has an outer lateral surface 26 therebetween. The exemplary outer lateral surface 26 is right circular cylindrical thus forming an outer diameter (OD) surface. The interior surface 28 forms a central longitudinal chamber or passageway 30. The exemplary passageway 30 extends full end-to-end with a first opening 32 at the first end 22 and a second opening 34 at the second end 24. In an exemplary use situation of a non-hybrid rocket, the first opening 32 is blocked by motor casing structure (not shown) and the second opening 34 is open to discharge (e.g., via a nozzle (not shown)) to provide an outlet. In an exemplary use situation of a hybrid rocket, the first opening 32 is an inlet for receiving a liquid flow of a liquid propellant or propellant component (not shown) from a source such as a tank either via a pump or via gas pressurization. Other components of a hybrid or non-hybrid rocket motor such as igniters are also not shown. The overall dimensions of the propellant grain will depend upon the particular application. An overall grain length L (FIG. 1) may broadly range from a few centimeters to several meters (e.g., 2.0cm to 10m). A ratio of said length to a transverse dimension such as a diameter D may broadly range between about 1:1 and about 20:1.

The central passageway 30 has an axially-varied cross-section. The exemplary cross-section includes a series of alternating low cross-section areas/regions 40A, 40B, 40C, 40D and high cross-section areas/regions 42A, 42B, 42C as radial extensions off a trunk of the passageway 30 formed by the low cross-section areas. The exemplary areas 40A-D and 42A-C are circular in footprint thus right circular cylindrical in exemplary shape. One or more of the radial extensions may be at intermediate axial positions or portions of the propellant grain length (i.e., there is propellant to both axial sides of the extension).

The size, shape, and distribution of the high cross-section areas/regions allows tailoring of combustion profile and thus the mass flow rate and thrust profile (e.g. thrust magnitude versus time). Generally, the enhanced surface area increases combustion rate to control the thrust profile.

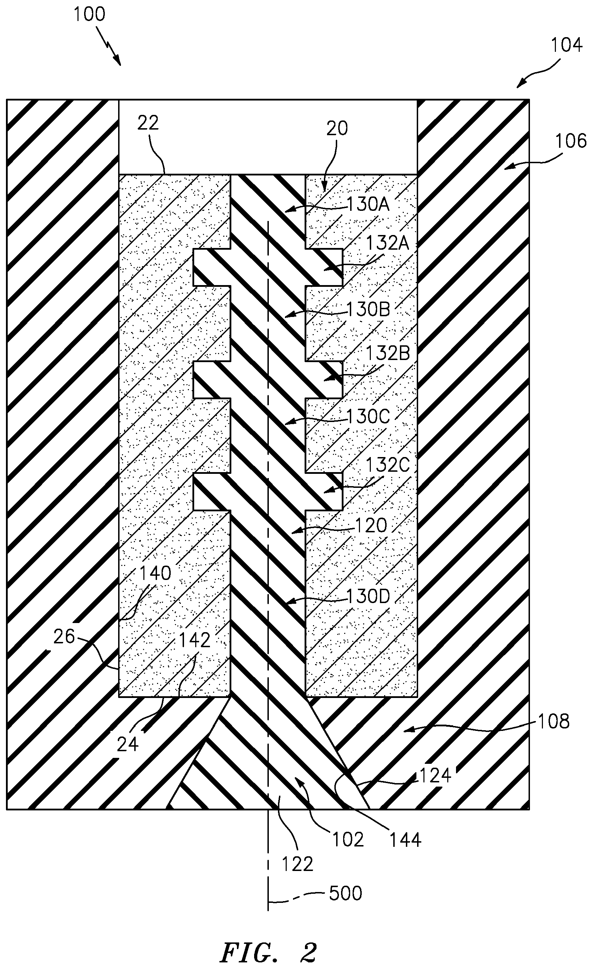

The propellant grain 20 may be molded as a single piece. In such an implementation, the single piece may fully circumscribe the axis 500 (e.g., as distinguished from a circumferentially segmented grain formed in mating sectors). FIG. 2 shows a mold 100 casting the grain 20 with the end 22 corresponding to a surface/meniscus of poured liquid propellant precursor prior to drying or curing. The mold 100 includes a mandrel 102 for molding the chamber 30. The mandrel is captured by an outer member 104. The exemplary outer member 104 is a full annulus member having a sidewall 106 and a transverse web 108 forming a lower end wall. The exemplary lower end wall is centrally apertured to mate with the mandrel. An alternative outer member (not shown) may be a similar structure but formed as a pair of halves mating at a parting plane. The mandrel 102 has a shaft portion 120 generally formed as an inverse of the chamber 30 with narrow portions 130A, 130B, 130C, 130D corresponding to chamber portions 40A-40D, respectively and wide portions 132A, 132B, 132C corresponding to chamber portions 42A-C.

The mold outer member 104 sidewall 106 has an inner diameter (ID) surface 140 for casting the grain OD surface 26. The mold outer member 104 web 108 has an internal shoulder surface 142 for casting the end 24. The web 108 also has a surface 144 for registering/mating with corresponding surface portions of the mandrel (e.g., shown as an exemplary frustoconical perimeter surface 124 of a head 122 of the mandrel). The exemplary materials for at least the mandrel 102 is an elastic material (e.g., a flexible elastomeric material) such as a silicone. The flexibility will allow the mandrel to be extracted from the ultimate cast grain. For example, the mandrel may be pulled outward with tension on the mandrel radially contracting the shaft portion 120 to allow disengagement of the wide portions 132A-C of the mandrel from the corresponding wide chamber portions 42A-C. The mold outer member 104 may also be of such a flexible material or may be relatively rigid such as formed of an alloy (e.g., stainless steel) .In further variations, the mold outer member could also have a rigid portion (e.g. a jacket such an alloy) backing the flexible material to provide both the needed flexibility for removal and the strength required for the casting process.

In a manufacture situation, after at least partial drying/curing, the mandrel may be extracted. During mandrel extraction, the outer member provides structural backing to the grain 20 to prevent damage to the grain. Thereafter, the mold outer member may be separated from the grain.

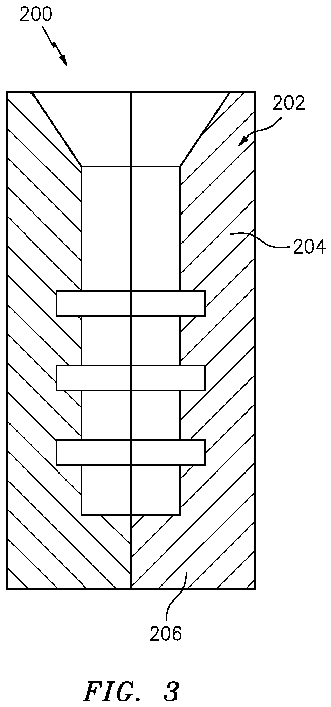

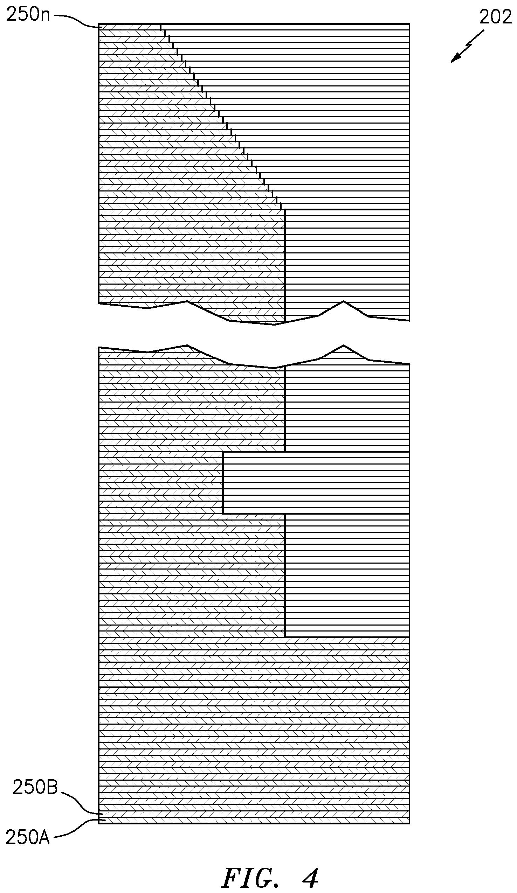

FIG. 3 shows a mold 200 used to mold the mandrel 102. The mold 200 is formed of a pair of mold halves 202 meeting at a parting plane 510. Each mold half 202 has a sidewall portion 204 and a base portion 206 combining to form a sidewall and base of the mold. In an exemplary embodiment, the mold halves are formed from a stack of laminations 250A, 250B...250n (FIG. 4) consistent with processes of the '812 and '315 patents. The laminations may be cut from sheet stock (e.g., of metal or alloy). Exemplary cutting techniques include laser machining and photolithographic techniques (e.g., photomasking and chemical etching). Exemplary sheet thickness is 0.0010 inch to 0.0030 inch (25 micrometers to 76 micrometers), more broadly, 20 micrometers to 100 micrometers or 20 micrometers to 1.0 millimeter. Alternatives to the lamination may involve conventional machining of an alloy forging or billet.

In the exemplary illustrated embodiment, the laminations 250A-250n have cut borders normal to the faces of the laminations, thus creating a stepped tool along angled surfaces such as those molding the frustoconical perimeter surface 124 of the mandrel head. Thus, the mandrel head may be generally frustoconical with a stepped smaller scale structure. However, the computer model used to cut the laminations may (e.g., via laser machining), depending on cutting technique, allow for off-normal inclination of the cut borders so that the combined laminations form a smooth continuous taper along for ultimately casting continuously tapering surfaces such as the mandrel head perimeter surface 124.

Once cut, the laminations may be stacked and bonded to each other (e.g., via braze, solder, or adhesive (e.g., epoxy)).

A variety of mandrel/chamber shapes more complex than those of FIGs. 1 and 2 may be formed in addition to casting features that mechanically backlock the mandrel (requiring its deformation to extract). For example, a complex cross-section of the chamber creating enhanced surface area may provide a large contact surface area with a straight mandrel. The contact surface area may be so large that extraction would require excessive force. In such a situation, the stretching of an elastic mandrel may disengage the mandrel surface from the chamber surface and effectively allow the mandrel to peel away from the chamber surface.

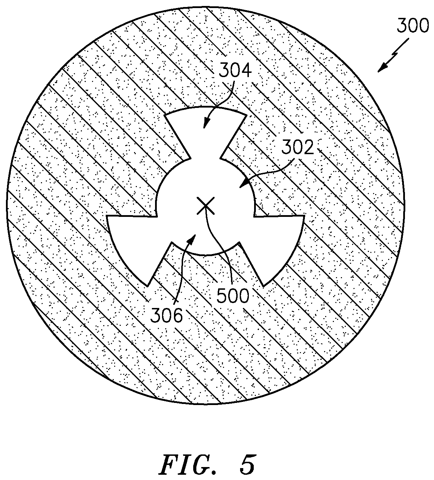

FIG. 5 is a cross-section of a grain 300 having an axial chamber 302 with relatively complex transverse perimeter cross-section/footprint (e.g., with radial branches 304 shown protruding from a central core 306). Such a situation has much greater chamber surface area (and thus mandrel contact area) than a right circular cylindrical chamber.

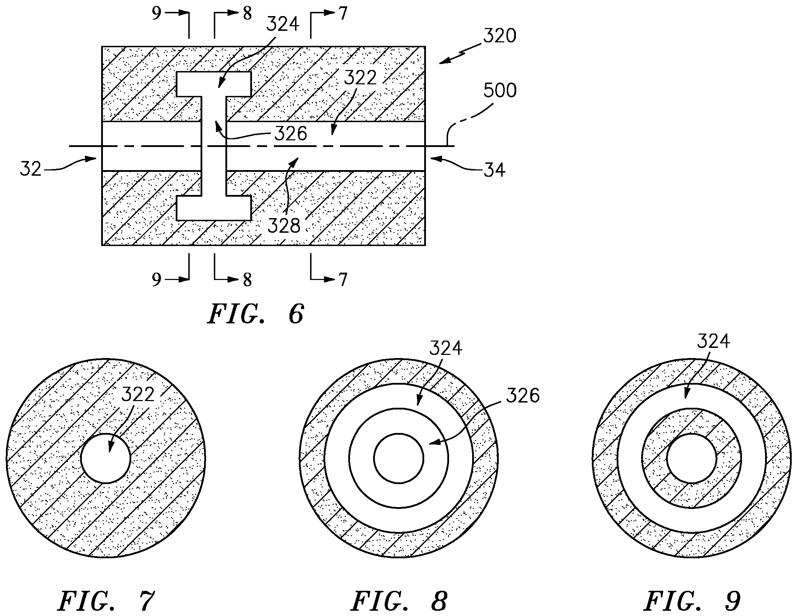

FIG. 6 shows a grain 320 having chamber 322 which presents even more extreme backlocking than the chamber 30 of the first grain 20. Whereas the corresponding FIG. 1 high cross-section regions 42A-C extend purely radially, the FIG. 6 region branches axially. The result is an annular branch chamber 324 with an annular port 326 to a main cylindrical trunk portion 328 of the chamber 322. In addition to tailoring the combustion profile, the branch chamber 324 may behave as a resonator (e.g., Helmholtz resonator). The resonator may dampen thermoacoustic instabilities.

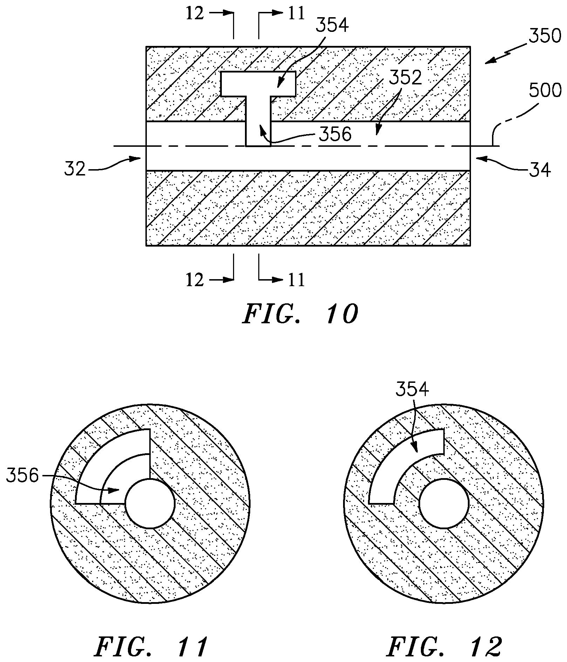

FIG. 10 shows a grain 350 having a chamber 352 formed as an asymmetric variant on the chamber 322 of FIG. 6 with the relatively wide cross-section area 354 (including port 356) extending outward in just one direction rather than: (a) around the full circumference; or (b) at even angular intervals. Whereas the FIG. 6 resonator may be tailored to damp axial mode thermoacoustic instabilities, the FIG. 10 chamber may damp tangential mode thermoacoustic instabilities.

## Claims

1. A method for manufacturing a solid propellant, the method comprising:
forming a tool (200) of layers (250) of a first material wherein cuts in the layers (250) form a first interior chamber in the tool;
using the tool (200) to mold a second material in the first interior chamber;
removing the molded second material (102) from the tool (200) ;
using the molded second material (102) to mold an interior chamber (30) in a rocket propellant grain (20); and
removing the molded second material (102) from the rocket propellant grain (20);
wherein the molded second material (102) molds a Helmholtz resonator in the rocket propellant grain (20).

2. The method of claim **1,** wherein:
the first material is metallic.

3. The method of claim 1 or **2,** wherein:
the second material is a silicone.

4. The method of claim **1,** 2 or **3,** wherein the forming the tool (200) comprises:
forming the layers (250) with the cuts; and
bonding the layers (250A) to each other.

5. The method of claim **4,** wherein the forming the layers (250) comprises:
photomasking and etching.

6. The method of claim 4 or 5, wherein the forming the layers (250) comprises:
laser cutting.

7. The method of any preceding claim, wherein:
the layers (250) have thickness of 0.001 inch to 0.003 inch (25 µm to 76 µm).

8. The method of any preceding claim, wherein the molded second material is an elastic mandrel (102) and comprises:
a shaft (120); and
at least one radial protrusion (132) from the shaft (120), the at least one radial protrusion (132) casting at least one radial extension (42) of the interior chamber (30).

9. The method of claim 8, wherein the at least one radial extension (42) of the interior chamber (30) comprises a full annulus (42).

10. The method of claim 8, wherein the at least one radial extension (42) of the interior chamber (30) is a single off-center extension at a given axial position.

11. The method of claim 8, 9 or 10, wherein the at least one radial extension (42) of the interior chamber (30) comprises a proximal portion (326, 356) and an axially protuberant distal portion (324, 354).

12. The method of any preceding claim, comprising repeating the using the molded second material (102) with the same molded second material (102) to mold a second rocket propellant grain (20).

## Patentansprüche

1. Verfahren zum Herstellen eines Festtreibstoffs, wobei das Verfahren Folgendes umfasst:
Bilden eines Werkzeugs (200) aus Schichten (250) eines ersten Materials, wobei Schnitte in den Schichten (250) eine erste innere Kammer im Werkzeug bilden;
Verwenden des Werkzeugs (200), um ein zweites Material in der ersten inneren Kammer zu formen;
Entfernen des geformten zweiten Materials (102) aus dem Werkzeug (200) ;
Verwenden des geformten zweiten Materials (102), um eine innere Kammer (30) in einem Raketentreibstoffkorn (20) zu formen; und
Entfernen des geformten zweiten Materials (102) aus dem Raketentreibstoffkorn (20);
wobei das geformte zweite Material (102) einen Helmholtz-Resonator in das Raketentreibstoffkorn (20) formt.

2. Verfahren nach Anspruch 1, wobei:
das erste Material metallisch ist.

3. Verfahren nach Anspruch 1 oder 2, wobei:
das zweite Material ein Silikon ist.

4. Verfahren nach Anspruch 1, 2 oder 3, wobei das Bilden des Werkzeugs (200) Folgendes umfasst:
Bilden der Schichten (250) mit den Schnitten; und
Verbinden der Schichten (250A) miteinander.

5. Verfahren nach Anspruch 4, wobei das Bilden der Schichten (250) Folgendes umfasst:
Fotomaskieren und Ätzen.

6. Verfahren nach Anspruch 4 oder 5, wobei das Bilden der Schichten (250) Folgendes umfasst:
Laserschneiden.

7. Verfahren nach einem der vorhergehenden Ansprüche, wobei:
die Schichten (250) eine Dicke von 0,001 Zoll bis 0,003 Zoll (25 µm bis 76 µm) aufweisen.

8. Verfahren nach einem der vorhergehenden Ansprüche, wobei das geformte zweite Material ein elastischer Dorn (102) ist und Folgendes umfasst:
eine Welle (120); und
mindestens einen radialen Vorsprung (132) von der Welle (120), wobei durch den mindestens einen radialen Vorsprung (132) mindestens eine radiale Verlängerung (42) der inneren Kammer (30) gegossen wird.

9. Verfahren nach Anspruch 8, wobei die mindestens eine radiale Verlängerung (42) der inneren Kammer (30) einen vollständigen Ring (42) umfasst.

10. Verfahren nach Anspruch 8, wobei die mindestens eine radiale Verlängerung (42) der inneren Kammer (30) eine einzelne außermittige Verlängerung an einer gegebenen axialen Position ist.

11. Verfahren nach Anspruch 8, 9 oder 10, wobei die mindestens eine radiale Verlängerung (42) der inneren Kammer (30) einen proximalen Abschnitt (326, 356) und einen axial vorstehenden distalen Abschnitt (324, 354) umfasst.

12. Verfahren nach einem der vorhergehenden Ansprüche, umfassend das Wiederholen des Verwendens des geformten zweiten Materials (102) mit demselben geformten zweiten Material (102), um ein zweites Raketentreibstoffkorn (20) zu formen.

## Revendications

1. Procédé de fabrication d'un propergol solide, le procédé comprenant :
la formation d'un outil (200) constitué de couches (250) d'un premier matériau, des découpes dans les couches (250) formant une première chambre intérieure de l'outil ;
l'utilisation de l'outil (200) pour mouler un second matériau dans la première chambre intérieure ;
le retrait du second matériau moulé (102) de l'outil (200) ;
l'utilisation du second matériau moulé (102) pour mouler une chambre intérieure (30) dans un grain de propergol de fusée (20) ; et
le retrait du second matériau moulé (102) du grain de propergol de fusée (20) ;
dans lequel le second matériau moulé (102) forme un résonateur de Helmholtz dans le grain de propergol de fusée (20).

2. Procédé selon la revendication 1, dans lequel :
le premier matériau est métallique.

3. Procédé selon la revendication 1 ou 2, dans lequel :
le second matériau est un silicone.

4. Procédé selon la revendication 1, 2 ou 3, dans lequel la formation de l'outil (200) comprend :
la formation des couches (250) avec les découpes ; et
la liaison des couches (250A) entre elles.

5. Procédé selon la revendication 4, dans lequel la formation des couches (250) comprend :
le photomasquage et la gravure.

6. Procédé selon la revendication 4 ou 5, dans lequel la formation des couches (250) comprend :
la découpe laser.

7. Procédé selon l'une quelconque des revendications précédentes, dans lequel :
les couches (250) ont une épaisseur comprise entre 0,001 pouce et 0,003 pouce (25 µm à 76 µm).

8. Procédé selon l'une quelconque des revendications précédentes, dans lequel le second matériau moulé est un mandrin élastique (102) et comprend :
un arbre (120) ; et
au moins une saillie radiale (132) s'étendant à partir de l'arbre (120), l'au moins une saillie radiale (132) formant par moulage au moins une extension radiale (42) de la chambre intérieure (30).

9. Procédé selon la revendication 8, dans lequel ladite au moins une extension radiale (42) de la chambre intérieure (30) comprend un anneau complet (42).

10. Procédé selon la revendication 8, dans lequel ladite au moins une extension radiale (42) de la chambre intérieure (30) est une extension unique excentrée à une position axiale donnée.

11. Procédé selon la revendication 8, 9 ou 10, dans lequel ladite au moins une extension radiale (42) de la chambre intérieure (30) comprend une partie proximale (326, 356) et une partie distale axialement saillante (324, 354).

12. Procédé selon l'une quelconque des revendications précédentes, comprenant la répétition de l'utilisation du second matériau moulé (102) avec le même second matériau moulé (102) pour mouler un second grain de propergol de fusée (20).
